# EUROPÄISCHE PATENTANMELDUNG

(11) **EP 2 487 470 A2**
(43) Veröffentlichungstag der Anmeldung: **15.08.2012**
(21) Anmeldenummer: 12000304.1
(22) Anmeldetag: 19.01.2012
(51) Int. Cl.: G01F 15/00, F16K 17/38, F16K 17/00

(54) **Brandschutzeinsatz für einen gasführenden Leitungsabschnitt und Gaszähler**

(30) Priorität: 26.01.2011 DE 102011009438
(71) Anmelder: Hydrometer GmbH, 91522 Ansbach (DE)
(72) Erfinder: Sonnenberg, Hans-Michael, 91522 Ansbach (DE); Hegendörfer, Andreas, 90617 Puschendorf (DE)
(74) Vertreter: Diehl Patentabteilung

(57) **Zusammenfassung**

Brandschutzeinsatz (2) für einen gasführenden Leitungsabschnitt, insbesondere den Einlass (1) eines Gaszählers, umfassend ein Schließelement für eine Durchgangsöffnung des Leitungsabschnitts und/oder des Brandschutzeinsatzes (2), welches durch ein bei einer ersten Temperatur schmelzbares Halterungselement (13) in einer offenen Stellung gegen eine in eine geschlossene Stellung wirkende Kraft gehalten wird und/oder dem ein durch ein bei der ersten Temperatur schmelzbares und/oder seine Form veränderndes Halterungselement zurückgehaltenes, bei Schmelzen und/oder Formänderung des Halterungselements eine in die geschlossene Stellung wirkende Kraft auf das Schließelement ausübendes Krafterzeugungsmittel zugeordnet ist, und ein sich bei einer zweiten Temperatur, die höher als die erste Temperatur ist, ausdehnendes thermisch reaktives, insbesondere aufschäumendes Material (15), welches zum Verschließen wenigstens einer in der geschlossenen Stellung verbliebenen Durchgangsöffnung, insbesondere eines Spalts zwischen dem Schließelement und der Innenwand (16) des Leitungsabschnitts, und/oder zum Halten des Schließelements in der geschlossenen Stellung durch einen Ausdehnungsvorgang angeordnet ist.

## Beschreibung

Die Erfindung betrifft einen Brandschutzeinsatz für einen gasführenden Leitungsabschnitt, insbesondere den Einlass eines Gaszählers.

Sicherheitsvorkehrungen bei Gaszählern sind vor allem im Bereich des Brandschutzes relativ wichtig, da entflammbare Gase im Falle eines Brandes bei einem Leck des Gaszählers eine Brandsituation verschlechtern und die von dem Brand ausgehende Gefahr erhöhen können. Um eine Gefahr durch austretendes Gas bei einem Gaszähler zu vermeiden, wurden bereits eine Mehrzahl an Lösungen vorgeschlagen.

So ist es beispielsweise bekannt, ein Brandschutzventil zu verwenden, in dem eine unter Druck stehende Feder das Ventil offen hält. Im Falle eines Brandes wird eine Ventilhalterung zerstört, die Feder entspannt sich und das Ventil wird geschlossen.

In der WO 2004/090478 A1 wird vorgeschlagen, innerhalb eines Gaszählergehäuses ein unter Wärmeinwirkung blähfähiges Material anzuordnen und ein Einkapselungsvolumen für das blähfähige Material zur Verfügung zu stellen, wobei bei irreversibler Ausdehnung des blähfähigen Materials im Brandfall das Einkapselungsvolumen aufgefüllt wird, so dass Gasleckageöffnungen im Gaszählergehäuse abgedichtet werden. Das Gaszählergehäuse ist weiterhin hitzebeständig, so dass dem blähfähigen Material auch im Brandfall ein angemessener, nicht zu großer Expansionsraum zur Verfügung steht. So soll eine Leckage von Gas im Brandfall und eine damit verbundene Explosionsgefahr vermieden werden. Dies ist jedoch nachteilhaft, da keine vollständige Sicherheit gegeben wird, insbesondere, da das Expansionsverhalten des blähfähigen Materials ungeführt und daher nicht immer absolut vorhersagbar ist. Zudem muss der Gaszähler zwangsläufig ein feuerfestes Gehäuse aufweisen, damit nicht doch durch Zerstörung des Gaszählers wieder Lecks entstehen können, so dass der Gaszähler insgesamt konstruktiv aufwendig und teuer ist.

JP 2004/09546 A betrifft eine Gasrohrverbindung, die eine thermisch expandierende Substanz auf der Innenseite der Verbindungsstelle aufweist. Erhitzt sich die Verbindung, dehnt sich die Substanz aus und verschließt den Durchlass. Allerdings ist auch hier die Expansion der Substanz nicht vorhersagbar, so dass keine hinreichende Sicherheit vor einem Gasleck gegeben ist.

Probleme treten auch immer dann auf, wenn ein Ventileinsatz an dem Gaseinlass eines Gaszählers verwendet wird. Solche Ventileinsätze umfassen ein Schließelement, welches mit einem Ventilsitz, der am Gaseinlass gebildet ist, zusammenwirkt, und welches Schließelement über eine Antriebsvorrichtung gesteuert in eine offene bzw. geschlossene Stellung verbringbar ist. In einem Brandfall ist zum einen üblicherweise die Antriebsvorrichtung nicht mehr ansteuerbar und/oder zerstört bzw. ihre Energieversorgung ausgefallen, zum anderen sind auch die Dichtmaterialien, beispielsweise Elastomere, nicht für derart hohe Temperaturen ausgelegt, so dass selbst bei geschlossener Stellung des Schließelements Undichtigkeiten im Brandfall auftreten können. Ein normales Dichtmittel kann also im Brandfall versagen, und ein Ventilschluss insbesondere aus Metall auf Metall ist schwierig gasdicht auszuführen und daher, wenn überhaupt realisierbar, teuer.

Der Erfindung liegt daher die Aufgabe zugrunde, einen Brandschutzeinsatz für den Gaseinlass eines Gaszählers zu schaffen, bei dem eine erhöhte Verlässlichkeit der Brandsicherung gegeben ist und ein schnelles Schließen des Einlasses sichergestellt ist.

Zur Lösung dieser Aufgabe ist erfindungsgemäß ein Brandschutzeinsatz für einen gasführenden Leitungsabschnitt, insbesondere den Einlass eines Gaszählers, vorgesehen, umfassend ein Schließelement für eine Durchgangsöffnung des Leitungsabschnitts und/oder des Brandschutzeinsatzes, welches durch ein bei einer ersten Temperatur schmelzbares Halterungselement (13) in einer offenen Stellung gegen eine in eine geschlossene Stellung wirkende Kraft gehalten wird und/oder dem ein durch ein bei der ersten Temperatur schmelzbares und/oder seine Form veränderndes Halterungselement zurückgehaltenes, bei Schmelzen und/oder Formänderung des Halterungselements eine in die geschlossene Stellung wirkende Kraft auf das Schließelement ausübendes Krafterzeugungsmittel zugeordnet ist, und ein sich bei einer zweiten Temperatur, die höher als die erste Temperatur ist, ausdehnendes thermisch reaktives, insbesondere aufschäumendes Material, welches zum Verschließen wenigstens einer in der geschlossenen Stellung verbliebenen Durchgangsöffnung, insbesondere eines Spalts zwischen dem Schließelement und der Innenwand des Leitungsabschnitts, und/oder zum Halten des Schließelements in der geschlossenen Stellung durch einen Ausdehnungsvorgang angeordnet ist.

Erfindungsgemäß wird also ein Brandschutzeinsatz vorgeschlagen, mithin eine Vorrichtung, die in einen gasführenden Leitungsabschnitt, insbesondere den Einlass eines Gaszählers, eingesetzt wird, um diesen im Falle eines Brandes zu schließen. Dabei wird erfindungsgemäß ein zweischrittiges Vorgehen vorgeschlagen. Bei Überschreitung einer ersten Temperatur, nämlich der Schmelztemperatur des wenigstens einen Halterungselements, wird bereits das Schließelement, welches durch das Halterungselement gegen eine in Richtung der geschlossenen Stellung wirkende Kraft gehalten wird bzw. auf welches das zuvor durch das Halterungselement zurückgehaltene Krafterzeugungsmittel nun wirkt, in die geschlossene Stellung bewegt, so dass der Leitungsabschnitt, insbesondere der Einlass des Gaszählers, geschlossen wird. Dies ist ein äußerst schneller, gerichteter Vorgang. Verbleibende Durchgangsöffnungen, insbesondere der Restspalt zwischen dem Schließelement und dem Leitungsabschnitt, werden nun bei weiterer Temperaturerhöhung bei der zweiten Temperatur durch das beispielsweise als Aufschäummittel wirkende thermisch expandierende Material, welches erst bei einer höheren Temperatur reagiert als die Schmelztemperatur des Halters, vollständig verschlossen.

Im Fall eines zurückgehaltenen Krafterzeugungsmittels muss das Halterungselement nicht unbedingt schmelzbar sein, sondern es können auch andere, bei der ersten Temperatur auftretende Formänderungseffekte betrachtet werden, beispielsweise sich zusammenziehende Materialien oder dergleichen.

Auch die vorliegende Erfindung schlägt also als eine Art zweiten Schritt die Verwendung eines thermisch reaktiven Materials vor, welches bei Überschreitung einer Schwelltemperatur bzw. eines Schwelltemperaturbereichs einen irreversiblen Ausdehnungsvorgang vornimmt, insbesondere ein Aufschäumen. Im Unterschied zum Stand der Technik werden hier jedoch nur geringe Mengen verwendet, die für die letztendliche vollständige Abdichtung des Leitungsabschnitts gezielt angeordnet werden können. Das thermisch reaktive Material ist also zweckgebunden angeordnet und nicht allein durch unkontrollierte Expansion für das Schließen des Leitungsabschnitts verantwortlich.

Dieses Schließen von verbleibenden Restöffnungen, insbesondere Spalten, hat den weiteren Vorteil, dass bei thermischen Verzug der Teile des Einsatzes oder des Leitungsabschnitts letztlich ein Ausgleich durch das thermisch reaktive Material stattfindet, was bei einer reinen Schmelzsicherung nicht sicher gewährleistet werden kann. Bei einem Ventileinsatz, der ja bereits ein Dichtmittel bzw. Dichtelement aufweist, wird dessen Wegfall durch die Übertemperatur kompensiert, das bedeutet, im Brandfall unbeständige Dichtelemente können bei ihrem Wegfall durch die irreversible Abdichtung mittels des thermisch expandierenden Materials ersetzt werden.

Insgesamt wird also durch den Brandschutzeinsatz und den Leitungsabschnitt eine Art Brandschutzventil bzw. ein zu einem Brandschutzventil erweitertes Abschaltventil bei einem Ventileinsatz mit eigener Antriebsvorrichtung gebildet, wobei der Brandschutzeinsatz vorteilhaft so ausgestaltet sein kann, dass er nach dem Schließen des Gehäuses des Gaszählers, beispielsweise also nach der Verbördelung des Gehäuses, noch nachträglich montiert werden kann, indem er beispielsweise einfach in den Einlass des Gaszählers eingeschoben wird, bis er dort mittels geeigneter Befestigungsmittel beispielsweise verrastet oder dergleichen. Der Brandschutzeinsatz kann zudem sehr wirtschaftlich gefertigt werden.

Neben der erhöhten Abdichtungssicherheit, welche insbesondere durch die zusätzliche Abdichtung mittels des sich ausdehnenden, thermisch reaktiven Materials gegeben ist, bietet der erfindungsgemäße Brandschutzeinsatz bzw. das Brandschutzventil auch weitere Vorteile. Wird der Brandschutzeinsatz am Gaseinlass eines Zählers vorgesehen, kann bereits der Einlauf des Gaszählers abgedichtet sein. Dies ermöglicht es beispielsweise, das Gehäuse des Gaszählers aus einem nicht feuerfesten Material, beispielsweise aus Kunststoff, aufzubauen, so dass eine deutliche Kostenersparnis gegeben ist. Wird das thermisch reaktive Material genau wie das Halterungselement nahe einer Gehäusewand oder dergleichen angeordnet, so folgt eine schnelle Erhitzung sowie ein schnelleres Reagieren bzw. Schmelzen, wobei zu bedenken ist, dass vorliegend nur eine sehr geringe Menge des thermisch reaktiven Materials benötigt wird.

Besondere Vorteile bietet der erfindungsgemäße Brandschutzeinsatz auch, wenn er als Ventileinsatz zur Bildung eines Abschaltventils, wie bereits beschrieben, ausgebildet ist. Ein Wegfall eines Dichtelements kann hierbei genauso kompensiert werden wie ein Ausfall einer Antriebsvorrichtung im Hinblick auf das wenigstens eine Halterungselement, was bei einer entsprechenden Ausführungsform noch näher dargelegt werden wird.

Es kann vorgesehen sein, dass bei einem insbesondere vertikal verlaufenden Leitungsabschnitt die wirkende Kraft die Schwerkraft ist und/oder die wirkende Kraft wenigstens teilweise durch ein elastisches Element, insbesondere eine Feder, erzeugt wird. Dabei wird es erfindungsgemäß bevorzugt, dass die in Richtung einer geschlossenen Stellung auf das Schließelement wirkende Kraft die Schwerkraft ist. Hierbei wird der Brandschutzeinsatz vorzugsweise in einem vertikal verlaufenden Leitungsabschnitt so eingesetzt, dass im Montagezustand das Schließelement nur aufgrund des Halterungselements oder einer Kopplung an eine Antriebsvorrichtung in seiner offenen Stellung gegen die Schwerkraft gehalten wird, mithin "oben" liegt. Schmilzt das Halterungselement, was im zweiten genannten Fall die Kopplung aufheben kann, aufgrund von Wärmeeinwirkung, so fällt das Schließelement aufgrund der Schwerkraft einfach hinunter in die geschlossene Stellung. Dabei ist zu beachten, dass eine derartige Ausgestaltung gerade bei vielen gängigen Gaszählern verwendbar ist, deren Einlass sich, vertikal ausgerichtet, auf der Oberseite oder Unterseite des Gaszählers erstreckt. Der Brandschutzeinsatz kann dann beispielsweise in das Innere des Gaszählergehäuses hineinragen, wobei bei Schmelzen des Halterungselements durch Herunterfallen des Schließelements ein schneller und unkomplizierter Schließvorgang möglich ist. Alternativ kann selbstverständlich auch vorgesehen sein, die in Richtung der geschlossenen Stellung wirkende Kraft auf andere Art und Weise über ein Krafterzeugungsmittel, beispielsweise über eine Feder, zu erzeugen, wobei allerdings auch mehrere Kraftquellen genutzt werden können. Das Ausnutzen der Schwerkraft hat jedoch hiergegen eindeutige konstruktive Vorteile.

In konkreter Ausgestaltung der vorliegenden Erfindung kann in einem ersten Ausführungsbeispiel vorgesehen sein, dass das Schließelement eine in einem Gehäuse des Brandschutzeinsatzes geführte, insbesondere zylindrische Hülse ist, die in der offenen Stellung von einer in einer zu der Längsrichtung der Hülse senkrechten Ebene geschlossenen Abschlussfläche des Gehäuses beabstandet ist und in der geschlossenen Stellung an der Abschlussfläche anliegt. Es kann also als Schließelement eine beispielsweise aus Stahl bestehende Hülse verwendet werden, die insbesondere, worauf im Folgenden noch näher eingegangen werden wird, in dem Leitungsabschnitt in der offenen Stellung gelagert wird. In der geschlossenen Stellung wird dann der Verschluss dadurch erreicht, dass die Hülse auf der einen Seite, beispielsweise der oberen Seite, bis auf einen Spalt an den Leitungsabschnitt anschließt, auf der unteren Seite jedoch die sie schließende Abschlussfläche kontaktiert. Die verbleibenden Spalten können dann durch das thermisch reaktive Material geschlossen werden. Eine derartige Hülse, wie bereits beschrieben, kann innerhalb des Leitungsabschnitts in der offenen Stellung angeordnet sein, so dass sie lediglich eine geringe Verkleinerung des vom Gas durchströmbaren Bereichs bedingt. Zudem fällt bei Nutzung der Schwerkraft eine solche Hülse letztlich parallel zum Gasstrom.

Wie bereits erwähnt, kann vorgesehen sein, dass die in der offenen Stellung im Wesentlichen formschlüssig innerhalb wenigstens eines Teils des Leitungsabschnitts angeordnete Hülse in der geschlossenen Stellung auf der einen Seite durch die Abschlussfläche und auf der anderen Seite durch eine Wand des Leitungsabschnitts begrenzt wird. Mit anderen Worten bedeutet dies, dass der Außendurchmesser der Hülse im Wesentlichen dem Innendurchmesser wenigstens des Teils des Leitungsabschnitts, in dem sie in der offenen Stellung wenigstens teilweise liegt, entspricht. Der Abstand der Abschlussfläche von wenigstens dem Teil des Leitungsabschnitts ist kleiner oder gleich der Länge der Hülse. Die Gehäusewand zwischen dem Teil des Leitungsabschnitts und der Abschlussfläche weist dabei möglichst große Öffnungen auf, so dass das Gas in der offenen Stellung der Hülse ungehindert durchströmen kann. Schließlich kann zweckmäßigerweise vorgesehen sein, dass die Abschlussfläche größer oder zumindest gleich dem Querschnitt der Hülse ist. Vorzugsweise kann die Abschlussfläche nach Art eines Deckels auch einen umgebogenen, umlaufenden Rand umfassen, wobei die Innenform des Randes auf die Außenform der Hülse abgestimmt ist und diese im geschlossenen Zustand folglich umgreift.

Die Abschlussfläche kann über auch der Führung der Hülse dienende Stege mit einem innerhalb des Leitungsabschnitts befestigbaren Befestigungsteil des Gehäuses verbunden sein. Das Gehäuse, in dem die Hülse geführt ist, weist dann also den Befestigungsteil auf, der ebenso innerhalb wenigstens des Teils des Leitungsabschnitts angeordnet ist, um die Befestigung des Brandschutzeinsatzes zu ermöglichen. Dieser Befestigungsteil ist dann über Stege, zwischen denen mithin Raum zum Durchströmen des Gases besteht, mit der Abschlussfläche verbunden.

In besonders vorteilhafter Ausgestaltung der vorliegenden Erfindung kann das thermisch reaktive Material in wenigstens einem in der geschlossenen Stellung einer Wand des Gehäuses und/oder des Leitungsabschnitts benachbarten Bereich der Außenwand der Hülse angeordnet sein, insbesondere in einer Nut und/oder die Hülse ringförmig umschließend. In einer Ausgestaltung des Brandschutzeinsatzes kann beispielsweise die Gesamtanordnung so gewählt sein, dass ein oberer Teil der Hülse, durch einen Spalt beabstandet, der Innenwand eines Teils des Leitungsabschnitts gegenüberliegt. Ein unterer Teil der Hülse wird von einem wie bereits beschrieben umgebogenen Rand der als eine Art Topf oder Deckel ausgebildeten Abschlussfläche aufgenommen und liegt somit einer Innenwand des Gehäuses gegenüber, wiederum durch einen schmalen Spalt getrennt. Wird nun das thermisch reaktive Material in diesen Bereichen auf der Außenwand angeordnet, wird es die verbleibenden, schmalen Spalte sicher schließen und somit für eine hervorragende Abdichtung sorgen, die auch Materialtoleranzen oder Verzüge im Material berücksichtigen kann. Dabei wird bevorzugt, dass das thermisch reaktive Material in einer umlaufenden Nut in der Außenwand der Hülse angeordnet wird, von wo aus es sich bei Erreichen oder Überschreiten der zweiten Temperatur ausdehnen kann.

Es sei an dieser Stelle angemerkt, dass selbstverständlich auch andere Positionen für das thermisch reaktive Material denkbar sind, beispielsweise wenigstens teilweise hülsenseitig auf der Abschlussfläche oder dergleichen.

In weiterer Ausgestaltung des Erfindungsgegenstands kann vorgesehen sein, dass das Halterungselement in einer Nut und/oder auf Vorsprüngen des Leitungsabschnitts und/oder des Gehäuses und/oder über Stege auf der Abschlussfläche dem Schließelement benachbart gelagert ist. Das Halterungselement wird also so gelagert oder befestigt, dass bei nicht geschmolzenem Halterungselement der in Richtung der geschlossenen Stellung auf das Schließelement wirkenden Kraft entgegengewirkt wird, wobei insbesondere das Schließelement unmittelbar an dem Halterungselement anliegt, so dass mit dessen Wegfall durch Schmelzen die Bewegung des Schließelements freigegeben wird.

In einem zweiten, zum ersten Ausführungsbeispiel alternativen Ausführungsbeispiel kann vorgesehen sein, dass der Brandschutzeinsatz als ein Ventileinsatz mit einer über ein Kopplungselement an das über ein insbesondere nicht hitzebeständiges Dichtungselement an einem ersten Flächenabschnitt abdichtende Schließelement gekoppelten, insbesondere elektrischen Antriebsvorrichtung zur Bewegung des Schließelements zwischen der geschlossenen Stellung und der offenen Stellung ausgebildet ist, wobei das thermisch reaktive Material bei Ausdehnung und geschlossenem Schließelement zur Abdichtung an einem zweiten Flächenabschnitt ausgebildet ist. In diesem Fall ist der Brandschutzeinsatz also ein Ventileinsatz, so dass ein ansteuerbares Abschaltventil vorliegt, das zusätzlich noch als Brandschutzventil wirkt, nachdem die zusätzlichen Schutzmaßnahmen, insbesondere das zweischrittige Vorgehen, realisiert sind. Das Schließelement (Ventilteller) weist dabei ein Dichtungselement auf, dass bei normalen Bendingungen, insbesondere also Betriebstemperaturen, eine Abdichtung in Wechselwirkung mit dem ersten Flächenabschnitt, mithin dem Ventilsitz am Leitungsabschnitt, aufweist. Bei einer gegenüber der Betriebstemperatur überhöhten Temperatur, insbesondere bei einem Brand, kann das Dichtelement seine abdichtende Funktion verlieren. Daher ist das dem zweiten Flächenabschnitt zugeordnete thermisch expandierende Material vorgesehen, welches bei der zweiten Temperatur für eine gezielte, verlässliche Abdichtung sorgt. Das Abschaltventil wird also ergänzt, so dass im Brandfall die sichere Abdichtung gewährleistet ist. Es sei angemerkt, dass es selbstverständlich auch denkbar ist, dass das Dichtelement an dem Leitungsabschnitt, mithin am Ventilsitz, angeordnet ist.

Der erste und der zweite Flächenabschnitt können dabei zu einer einzigen Fläche gehören, es kann jedoch auch vorgesehen sein, dass sie unterschiedliche, insbesondere unterschiedlich orientierte Flächen des Leitungsabschnitts betreffen. In einer Ausgestaltung ist es im übrigens auch denkbar, dass das thermisch expandierende Material seitens des Leitungsabschnitts, insbesondere seitens des Gaszählers, vorgesehen ist, worauf bezüglich des erfindungsgemäßen Gaszählers noch näher eingegangen werden wird.

In besonders vorteilhafter Weiterbildung dieses Ausführungsbeispiels kann vorgesehen sein, dass sich der zweite Flächenabschnitt in einer Strömungsrichtung des Gases durch den Leitungsabschnitt und/oder in einer Bewegungsrichtung des Schließelements in die geschlossene Stellung erstreckt. Bei einer solchen Anordnung entstehen zusätzliche Haltekräfte, da das Schließelement letztlich senkrecht zu seiner Bewegungsrichtung eingeklemmt wird, wenn der Spalt zwischen dem Schließelement und dem zweiten Flächenabschnitt geschlossen wird. Das Verhalten des Dichtelements ist nicht mehr von Bedeutung. Es sei darauf hingewiesen, dass bei anderen Ausrichtungen des zweiten Flächenabschnitts darauf geachtet werden sollte, dass keine nennenswerte, das Schließelement bewegende Kraft auf das Schließelement auftritt.

Wie einleitend bereits erwähnt wurde, kann es im Brandfall auch vorkommen, dass das Schließelement nicht mehr über die Antriebsvorrichtung in die geschlossene Stellung bewegt werden kann. Damit die erfindungsgemäß vorgesehene Kraft jedoch wirken kann, muss zumindest eine hinreichende Entkopplung möglich sein, um auch gegen die durch die Antriebsvorrichtung gegebene Haltekraft ein Schließen des Gesamtventils im Brandfall zu ermöglichen.

Ist, wie bereits allgemein beschrieben wurde, ein durch das oder ein Halteelement zunächst zurückgehaltenes Krafterzeugungsmittel, insbesondere eine Feder, vorgesehen, kann beispielsweise vorgesehen sein, dass lediglich eine partielle Entkopplung gegeben ist, beispielsweise das Koppelelement eine Rutschkupplung aufweist, die so dimensioniert ist, dass die von dem Krafterzeugungsmittel erzeugte Kraft gegen eine von der Antriebsvorrichtung gegebene Haltekraft ausreicht, um das Schließelement in die geschlossene Stellung zu verbringen.

Es wird jedoch bevorzugt, dass das schmelzbare Halterungselement für das insbesondere gegen die Schwerkraft gehaltene Schließelement Teil des Kopplungselements ist, insbesondere derart, dass das Schmelzen des Halterungselements eine Entkopplung des Schließelements von der Antriebsvorrichtung bewirkt. In dieser Ausgestaltung schmilzt also ein Teil des Kopplungselements, dass das Schließelement mit der Antriebsvorrichtung verbindet, weg, so dass das Schließelement freigegeben wird und der Krafteinwirkung folgt. Ist die wirkenden Kraft die Schwerkraft, fällt das Schließelement mit Wegfall der Kopplung einfach in die Schließstellung, wo dann bei der höheren zweiten Temperatur das thermisch expandierende Material den Restspalt schließt. Diese Ausgestaltung lässt sich jedoch auch sowohl mit einer aufgrund eines Krafterzeugungsmittels wirkenden Kraft wie auch bei Rückhaltung des Krafterzeugungsmittels durch ein (weiteres) Halterungselement selbstverständlich vorteilhaft einsetzen, um letztlich eine Entkopplung der Brandschutzfunktionalität und der insbesondere elektrischen Funktionalität über die Antriebsvorrichtung zu erreichen. Die durch die Antriebsvorrichtung erzeugte mechanische Hilfskraft behindert mithin den Brandschutz-Schließmechanismus nicht und hebt diesen auch nicht auf. Beispielsweise kann eine Kupplung oder Welle aus Kunststoff vorgesehen werden, die bei der ersten Temperatur die Antriebsvorrichtung von dem Schließelement durch Schmelzen abkoppelt.

Es kann ferner vorgesehen sein, dass der Brandschutzeinsatz ein bis wenigstens zu einer Temperatur von 700 °C thermisch stabiles Gehäuse umfasst, welches insbesondere eine Abstützfläche für das bevorzugt als elastisches Element, insbesondere Feder, ausgebildete Krafterzeugungsmittel aufweist. Das Schließelement und ggf. das Kopplungselement werden also durch das Gehäuse, das eine thermisch stabile Halterung darstellt, bezüglich des Leitungsabschnittes positioniert, wobei das Gehäuse auch eine Abstützfläche für ein Krafterzeugungsmittel, insbesondere eine Feder, zur Verfügung stellen kann.

Vorteilhaft es ist ferner, wenn ein die Kraft erzeugendes, auch ohne Schmelzen des Halterungsmittels bereits auf das Schließelement wirkendes elastisches Element zur Erzeugung einer bei Ansteuerung des Ventileinsatzes zum Schließen genutzten Kraft ausgebildet ist. In diesem Fall wird das Krafterzeugungsmittel, hier ein elastisches Element, in den "normalen" Betriebsprozess mit eingebunden, indem ein Betrieb der Antriebsvorrichtung letztlich nur noch für den Öffnungsvorgang des gebildeten Abschaltventils erforderlich ist, da das elastische Element, insbesondere eine Feder, die Schließ-Stellbewegung übernimmt. Soll das Abschaltventil wieder geöffnet werden, wird das elastische Element gegen dessen elastische Kraft wieder vorgespannt, indem die Antriebsvorrichtung betrieben wird.

Dabei sei an dieser Stelle noch angemerkt, dass die hier beschriebenen Ausführungsbeispiele nicht auf eine lineare Bewegung des Schließelements zwischen der offenen Stellung und der geschlossenen Stellung festgelegt sind, sondern dass auch Anordnungen denkbar sind, die beispielsweise eine Drehbewegung, insbesondere nach Art eines Schwenkhebels, unterstützen.

Im allgemeinen Fall kann zweckmäßigerweise kann der Brandschutzeinsatz, insbesondere an dem Befestigungsteil des Gehäuses, mit entsprechenden Befestigungsmitteln des Leitungsabschnitts zusammenwirkende Befestigungsmittel aufweisen, insbesondere in eine Nut des Leitungsabschnitts eingreifende Vorsprünge, und/oder über ein Befestigungsmittel an einem Gehäuse des Gaszählers befestigt sein. Es sind also Befestigungsmittel vorgesehen, die mit Befestigungsmitteln des Leitungsabschnitts, insbesondere des Einlasses, derart zusammenwirken, dass der Brandschutzeinsatz eine definierte Stellung bezüglich des Leitungsabschnitts beibehält. Vorteilhaft kann dabei eine Nut in der Innenwand des Leitungsabschnitts vorgesehen sein, in die wenigstens ein Vorsprung des Brandschutzeinsatzes rastend eingreift. Werden die relevanten Teile des Brandschutzeinsatzes, insbesondere der Befestigungsteil des Gehäuses, mit einer entsprechenden Flexibilität bzw. Elastizität ausgestattet, lässt sich nach Zusammenbau des Gaszählers der Brandschutzeinsatz noch immer nachrüsten, indem er einfach in den Einlass eingeschoben werden kann, bis der wenigstens eine Vorsprung in der Nut verrastet und der Brandschutzeinsatz somit fest und sicher in dem Leitungsabschnitt aufgenommen ist, so dass insgesamt ein Brandschutzventil gebildet ist. Möglich ist es jedoch auch, andere Befestigungsvarianten zu wählen, beispielsweise ein Zusammenwirken mit dem Gehäuse des Gaszählers im allgemeinen, was zwar eine Nachrüstung schwieriger gestaltet, aber den Leitungsabschnitt insgesamt freier hält, gerade im Hinblick auf einen als Ventileinsatz ausgebildeten Brandschutzeinsatz. Auch hier ist sowohl ein Zusammenwirken von Befestigungsmitteln denkbar, es ist aber auch möglich, den Brandschutzeinsatz durch Verkleben, Verschweißen oder dergleichen zu befestigen, wobei auf die Temperaturstabilität bis wenigstens 700 °C zu achten ist.

Vorzugsweise kann das Halterungselement aus wenigstens einem Kunststoff bestehen und/oder als erste Temperatur eine Schmelztemperatur oberhalb von 70° C, insbesondere von 100° C, aufweisen. Beispielsweise kann das Halterungselement aus bereits bei niedrigeren Temperaturen schmelzenden Kunststoffen wie beispielsweise Polyethylen oder Polypropylen, bestehen, wobei relevant ist, dass die erste Temperatur oberhalb der Betriebstemperatur des Leitungsabschnitts/Gaszählers liegt, jedoch niedrig genug ist, dass ein sicherer Brandschutz gegeben werden kann. So kann beispielsweise eine Temperatur von etwa 100° C gewählt werden.

Bezüglich des thermisch reaktiven Materials kann vorgesehen sein, dass die zweite Temperatur größer als 100° C, insbesondere größer als 140° C, ist. Etwa bei 140° C gelegene Reaktionstemperaturen des thermisch reaktiven Materials haben sich als geeignet erwiesen.

Thermisch reaktive Materialien, also insbesondere aufschäumende bzw. blähfähige Materialien, die im erfindungsgemäßen Brandschutzeinsatz eingesetzt werden können, sind im Stand der Technik weithin bekannt. Rein beispielsweise sei auf Blähglimmer und/oder Kombinationen aus Polyesterharz und Härter, gegebenenfalls mit einem Füllstoff, verwiesen. Auch Vermiculit kann verwendet werden. Zweckmäßigerweise kann durch Kombination der genannten oder weiterer Materialien ein Material geschaffen werden, welches für die spezielle Verwendungsumgebung ideal geeignet ist.

Neben dem Brandschutzeinsatz betrifft die vorliegende Erfindung auch einen Gaszähler, wobei zum einen vorgesehen sein kann, dass er einen mit einem erfindungsgemäßen Brandschutzeinsatz versehenen Einlass umfasst. Zum anderen ist jedoch auch ein Gaszähler realisierbar, der einen Einlass und einen an dem Einlass als Leitungselement vorgesehenen Brandschutzeinsatz aufweist, umfassend ein Schließelement für eine Durchgangsöffnung des Leitungsabschnitts und/oder des Brandschutzeinsatzes, welches durch ein bei einer ersten Temperatur schmelzbares Halterungselement in einer offenen Stellung gegen eine in eine geschlossene Stellung wirkende Kraft gehalten wird und/oder dem ein durch ein bei der ersten Temperatur schmelzbares und/oder seine Form veränderndes Halterungselement zurückgehaltenes, bei Schmelzen und/oder Formänderung des Halterungselements eine in die geschlossene Stellung wirkende Kraft auf das Schließelement ausübendes Krafterzeugungsmittel zugeordnet ist, wobei an dem Leitungsabschnitt ein sich bei einer zweiten Temperatur, die höher als die erste Temperatur ist, ausdehnendes thermisch reaktives, insbesondere aufschäumendes Material angeordnet ist, welches zum Verschließen wenigstens einer in der geschlossenen Stellung verbliebenen Durchgangsöffnung, insbesondere eines Spalts zwischen dem Schließelement und der Innenwand des Leitungsabschnitts, und/oder zum Halten des Schließelements in der geschlossenen Stellung durch einen Ausdehnungsvorgang angeordnet ist. Das thermisch reaktive, expandierende Material kann als auch leitungsabschnittseitig als Teil des Gaszählers realisiert werden.

Sämtliche Ausführungen bezüglich des Brandschutzeinsatzes lassen sich analog auf den erfindungsgemäßen Gaszähler übertragen, so dass auch hiermit die bereits genannten Vorteile erreicht werden können. Durch das Vorsehen des Brandschutzeinsatzes in dem Einlass des Gaszählers wird letztlich ein Brandschutzventil, insbesondere auch ein zu einem Branschutzventil erweitertes Abschaltventil, geschaffen, das schnell reagiert und für einen sicheren Verschluss des Einlasses des Gaszählers sorgt.

Zweckmäßigerweise kann der Einlass des Gaszählers eine umlaufende Nut an seiner Innenwand aufweisen, die als Befestigungsmittel für den Brandschutzeinsatz wirkt, und/oder der Einlass kann im Wesentlichen vertikal ausgerichtet sein.

Weitere Vorteile und Einzelheiten der vorliegenden Erfindung ergeben sich aus den im Folgenden beschriebenen Ausführungsbeispielen sowie anhand der Zeichnung. Dabei zeigen:
- Fig. 1: eine perspektivische Ansicht eines Einlasses mit einem erfindungsgemäßen Brandschutzeinsatz gemäß einer ersten Ausführungsform, wobei sich das Schließelement in der offenen Stellung befindet,
- Fig. 2: eine perspektivische Ansicht des Einlasses und des Brandschutzeinsatzes gemäß Fig. 1, wobei sich das Schließelement in der geschlossenen Stellung befindet,
- Fig. 3: eine geschnittene Ansicht mit dem Schließelement in der geschlossenen Stellung,
- Fig. 4: eine Schnittansicht im Bereich eines Gaseinlasses eines Gaszählers mit einem erfindungsgemäßen Brandschutzeinsatz gemäß einer zweiten Ausführungsform,
- Fig. 5: einen Teilausschnitt der Ansicht in Fig. 4 bei geschlossener Stellung,
- Fig. 6: eine Schnittansicht im Bereich eines Gaseinlasses eines erfindungsgemäßen Gaszählers mit einem Brandschutzeinsatz gemäß einer dritten Ausführungsform,
- Fig. 7: eine Schnittansicht im Bereich eines Gaseinlasses eines Gaszählers mit einem erfindungsgemäßen Brandschutzeinsatz gemäß einer vierten Ausführungsform,
- Fig. 8: eine Schnittansicht im Bereich eines Gaseinlasses eines Gaszählers mit einem erfindungsgemäßen Brandschutzeinsatz gemäß einer vierten Ausführungsform, und
- Fig. 9: eine weitere Möglichkeit zur Lage des zweiten Flächenabschnitts.

Zunächst soll eine erste Ausführungsform dargestellt werden, die einen nicht als Ventileinsatz mit Antriebsvorrichtung ausgebildeten erfindungsgemäßen Brandschutzeinsatz betrifft.

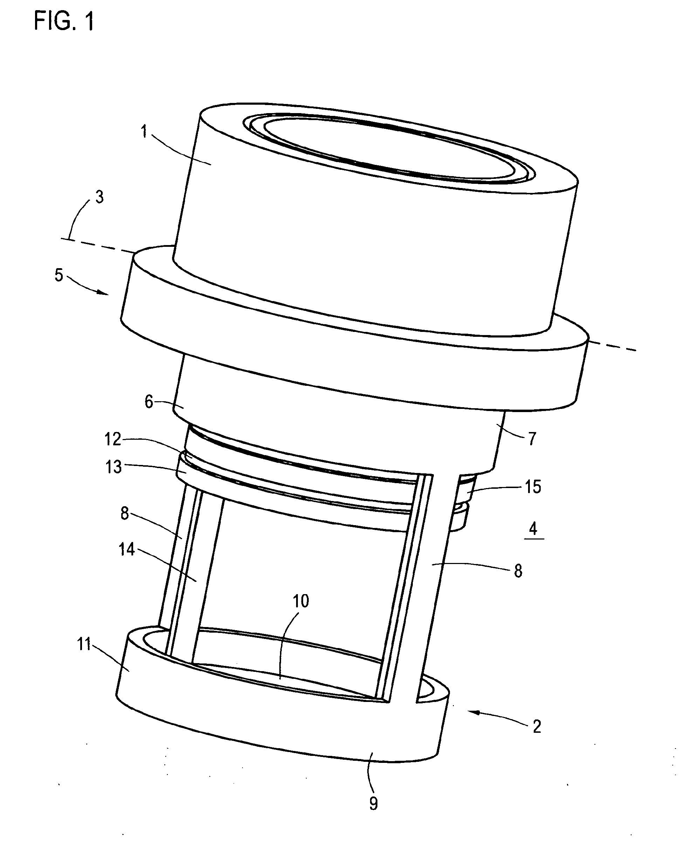

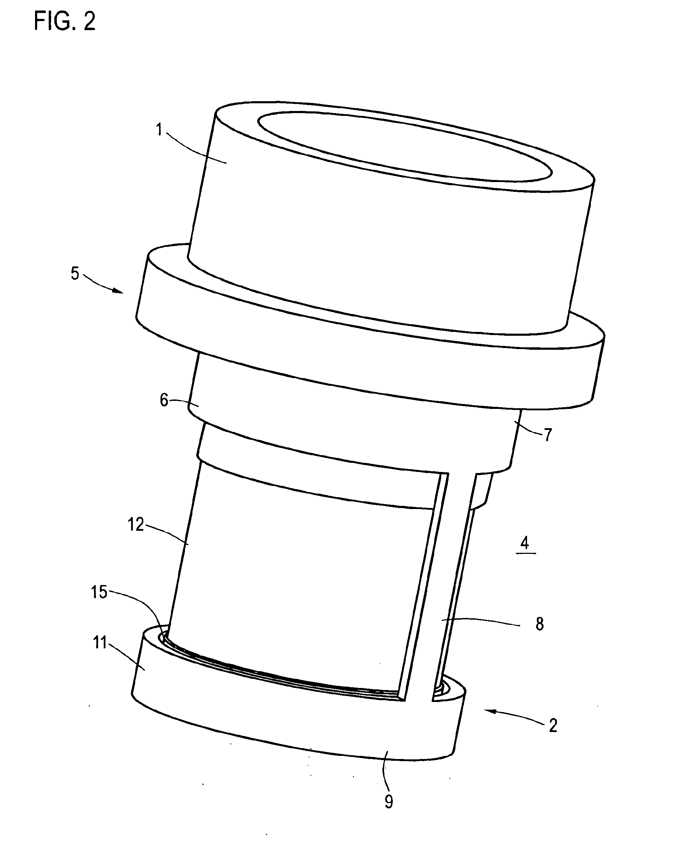

Fig. 1 und Fig. 2 zeigen perspektivische Ansichten eines in einen Einlass 1 eines hier nicht näher gezeigten Gaszählers eingesetzten erfindungsgemäßen Brandschutzeinsatzes 2. Der Einlass 1, welcher üblicherweise ein hier nicht näher dargestelltes Anschlussgewinde aufweist, ragt vertikal aus der Oberseite des bei 3 nur angedeuteten Gehäuses des Gaszählers hinaus, wobei der Brandschutzeinsatz 2 so eingesetzt ist, dass er in den Innenraum 4 des Gaszählers hineinragt. Der Einlass 1 als Leitungsabschnitt und der erfindungsgemäße Leitungseinsatz 2 bilden gemeinsam ein Brandschutzventil 5, wie im Folgenden näher erläutert werden soll.

Der Brandschutzeinsatz 2 weist zunächst ein allgemein mit 6 bezeichnetes Gehäuse auf, welches einen Befestigungsteil 7 umfasst. Der Befestigungsteil 7 weist in hier nicht näher gezeigter Weise einen Vorsprung auf, der in eine umlaufende Nut im Inneren des Einlasses 1 eingreift, um den Brandschutzeinsatz 2 dort zu haltern. Der Vorsprung und die Nut stellen also miteinander wechselwirkende Befestigungsmittel dar. Auf diese Weise wird ermöglicht, dass der Brandschutzeinsatz 2 auch nach Schließen des Gehäuses 3 noch einfach in den Gaszähler eingesetzt werden kann, indem er einfach in den Einlass 1 hineingedrückt wird, bis der Vorsprung in die Nut eingreift und somit der Brandschutzeinsatz 2 in dem Einlass 1 fixiert wird.

Über zwei Stege 8 ist der Befestigungsteil mit einem Unterteil 9 des Gehäuses 6 verbunden, der eine geschlossene Abschlussfläche 10 sowie einen Rand 11 aufweist, so dass sich insgesamt eine topfartige Ausbildung ergibt. Die Abschlussfläche 10 ist im Einbauzustand horizontal, also senkrecht zur Längsrichtung des Gehäuses 6, angeordnet.

Innerhalb des Gehäuses 6 ist eine Hülse 12 gelagert. Die Hülse 12 ist zylindrisch und in ihren Außenabmessung der Form des Gehäuses 6 angepasst, so dass sie durch dieses geführt wird. In Fig. 1, dem Normalzustand des Brandschutzeinsatzes 2, befindet sich die Hülse 12 als Schließelement in einer geöffneten Stellung, so dass Gas durch die Öffnungen zwischen den Stegen 8 aus dem Einlass 1 in den Gaszähler strömen kann. Nachdem die Schwerkraft auf die Hülse 12 wirkt, so dass diese in das Unterteil 9, die Abschlussfläche 10 kontaktierend, fallen würde, vgl. Fig. 2, und somit das Brandschutzventil 5 schließen würde, ist ein aus Kunststoff bestehendes Halterungselement 13 vorgesehen, welches in dem in Fig. 1 gezeigten Zustand die im Übrigen hier aus Stahl gefertigte Hülse 12 trägt. Dazu stützt sich das Halterungselement 13 im vorliegenden Ausführungsbeispiel auf in Größe, Form und Position den Stegen 8 angepassten Stegen 14 ab, wobei an dieser Stelle angemerkt sein soll, dass auch andere Befestigungsmöglichkeiten des Halterungselements denkbar sind, beispielsweise in einer in den Stegen 8 vorgesehenen Nut oder dergleichen.

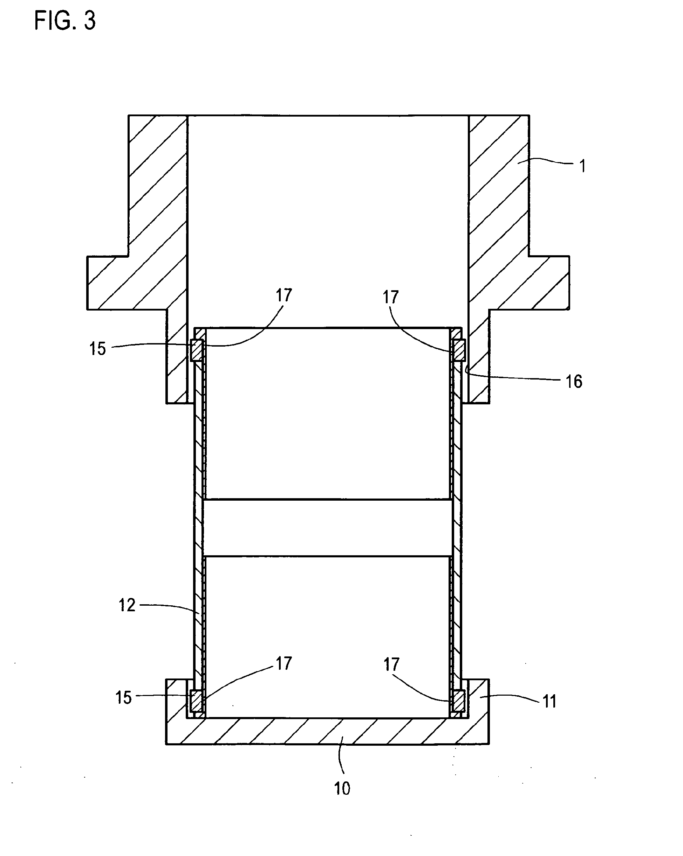

Das Halterungselement 13 besteht wie erwähnt aus Kunststoff, der bei einer ersten Temperatur seine Schmelztemperatur hat, die vorliegend im Bereich von etwa 100° C liegt. Steigt die Temperatur des Halterungselements 13 und seiner Stege 14 mithin über diese erste Temperatur, schmilzt das Halterungselement 13 mit den Stegen 14 und die Hülse 12 fällt unter Einfluss der Schwerkraft in die in Fig. 2 gezeigte Stellung hinab, in der sie auf der Abschlussfläche 10 aufliegt, aber dennoch noch in den Bereich des Einlasses 1 hineinragt. Ersichtlich ist nun der Innenraum 4 des Gaszählers von dem Einlass 1 bis auf einen Spalt zwischen der Innenwand des Einlasses 1 und der Hülse 12 und einen gegebenenfalls vorhandenen Spalt im Bereich der Abschlussfläche 10 abgedichtet. Steigt nun die Temperatur, wie bei einem Brand üblich, weiter, genauer gesagt bis zu einer zweiten Temperatur, bei der sich ein thermisch reaktives Material 15 irreversibel ausdehnt, so werden auch diese noch verbliebenen Durchgangsöffnungen für Gas sicher abgedichtet, wie aus der Darstellung in Fig. 3 ersichtlich wird.

Dort handelt es sich um eine prinzipielle Schnittansicht, die die Hülse 12 in der geschlossenen Stellung zeigt. Ersichtlich liegt sie auf der Abschlussfläche 10 auf, wobei in einem kleinen Abstand die Außenwand der Hülse 12 der Innenwand des Randes 11 gegenüberliegt. Gleichzeitig liegt im oberen Teil der Hülse 12 die Außenwand der Hülse 12 einer Innenwand 16 des Einlasses 1 gegenüber. Die Befestigungsmittel, die Stege 8 sowie der Befestigungsteil 7 des Gehäuses 6 sind aus Übersichtlichkeitsgründen nicht dargestellt.

Ersichtlich weist die Hülse 12 im oberen Bereich und im unteren Bereich jeweils umlaufende Nuten 17 auf, in denen das thermisch reaktive Material 15 so angeordnet ist, dass es bei seiner Ausdehnung die Spalte zwischen der Hülse 12 und der Innenwand 16 bzw. der Hülse 12 und dem Rand 11 verschließt bzw. abdichtet. Zudem wird das Schließelement fest in der geschlossenen Stellung gehalten.

Die zweite Temperatur, bei der die Reaktion des thermisch reaktiven Materials 15 stattfindet liegt hier bei etwa 140°, so dass insgesamt ein zweischrittiger, schneller und sicherer Verschlussvorgang im Brandfall gegeben ist.

Es sei an dieser Stelle angemerkt, dass die Schwerkraft unterstützend oder auch dann, wenn die Schwerkraft nicht genutzt werden kann, um das Brandschutzventil 5 bei Wegfall des Halterungselements 13 zu schließen, auch eine Feder oder ein sonstiges Mittel zur Erzeugung der in Richtung der Schließstellung wirkenden Kraft verwendet werden kann.

Weiterhin sei darauf hingewiesen, dass, obwohl die Hülse 12 hier als aus mehreren tiefgezogenen Teilen zusammengesetzt dargestellt ist, sie auch einteilig hergestellt werden kann, wobei die Nuten 17 beispielsweise durch Rollieren hergestellt werden können.

Für die nun folgende Darstellung einiger als Ventileinsatz mit einer Antriebsvorrichtung zur Bildung eines Abschaltventils versehenen Brandschutzeinsätze werden der Einfachheit halber entsprechende Komponenten mit entsprechenden Bezugszeichen versehen.

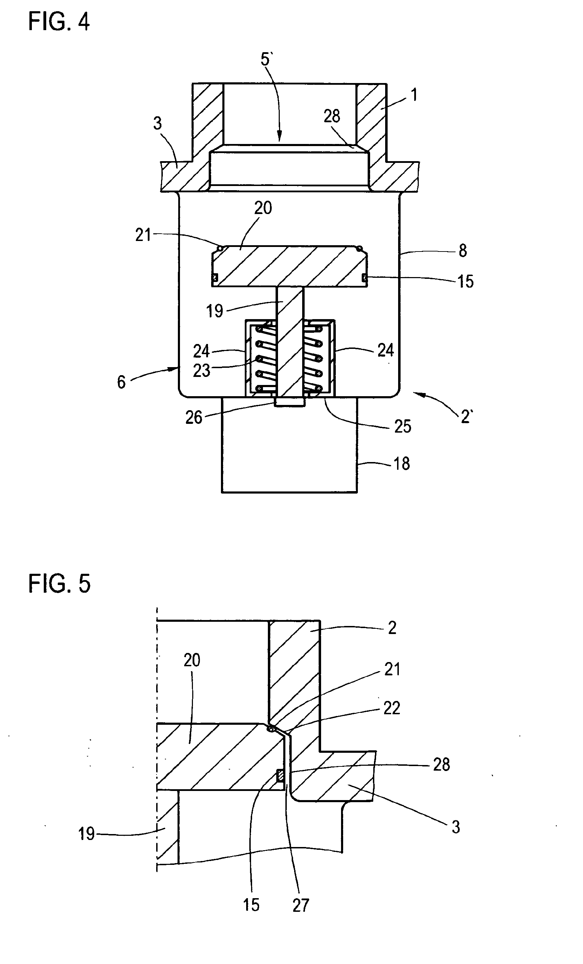

Fig. 4 zeigt eine Schnittansicht im Bereich des Gaseinlasses 1 eines Gaszählers, von dem weiterhin ein Teil des Gehäuses 3 gezeigt ist. Am Gehäuse 3 ist über hier nicht näher gezeigte Befestigungsmittel ein erfindungsgemäßer Brandschutzeinsatz 2' in einer zweiten Ausführungsform befestigt, und zwar über ein letztlich mehrere Stege 8 umfassendes Gehäuse 6, an dem auch eine Antriebsvorrichtung 18, hier eine elektrische Antriebsvorrichtung, befestigt ist. Die Antriebsvorrichtung 18 ist über ein Kopplungselement 19 mit einem als Ventilteller 20 ausgebildeten Schließelement verbunden. Über die elektrische Antriebsvorrichtung 18 kann der Ventilteller 20 zwischen einer offenen Stellung des gebildeten Abschaltventils (in Fig. 4 gezeigt) und einer geschlossenen Stellung (in Fig. 5 gezeigt) bewegt werden. Um eine Abdichtung zu erreichen, weist der Ventilteller 20 ein umlaufendes Dichtungselement 21 aus wenigstens einem Elastomer auf, welches in der geschlossenen Stellung, vgl. auch Fig. 5, an einem ersten Flächenabschnitt 22 des Gaseinlasses 1 als Ventilsitz anliegt.

Nachdem die gezeigte Gesamtanordnung jedoch auch als ein Brandschutzventil wirken soll, sind weitere Maßnahmen vorgesehen, die eine sichere Abdichtung auch im Brandfall ermöglichen.

Hierzu ist als Krafterzeugungsmittel eine das Kopplungselement umlaufende Feder 23 vorgesehen, die jedoch, so lange nicht eine erste Temperatur überschritten wird, nicht auf den Ventilteller 20, diesen in die geschlossene Stellung drückend, wirkt, sondern durch Arretierungsarme 24 als Halterungselemente zurückgehalten wird. Diese sind aus Kunststoff ausgebildet, der eine erste Temperatur als seine Schmelztemperatur aufweist, welche vorliegend im Bereich von etwa 100° C liegt. Steigt nun die Temperatur der Arretierungsarme 24 über die erste Temperatur, schmelzen die als Halterungselemente wirkenden Arretierungsarme 24 und die Feder 23, sich auf einer Abstützfläche 25 des Gehäuses 6 abstützend, presst den Ventilteller 20 als Schließelement in die in Fig. 5 gezeigte geschlossene Stellung. Dies ist trotz der Haltekraft der elektrischen Antriebsvorrichtung 18 möglich, nachdem hier eine Rutschkupplung 26 vorgesehen ist, so dass das Kopplungselemerit 19 "durchrutschen" kann.

Es sei jedoch an dieser Stelle angemerkt, dass wie bei den noch folgenden Ausführungsbeispielen statt der Rutschkupplung 26 auch vorgesehen sein kann, dass das Kopplungselement 19 oder zumindest ein Teil des Kopplungselement 19 selbst bei der ersten Temperatur schmelzen, um die Kopplung an die Antriebsvorrichtung 18 zu beenden, wobei dann jedoch eine Führung für den Ventilteller oder die Reste des Kopplungselements 19 vorgesehen werden sollte.

Nachdem auch das Dichtelement 21 bei hohen Temperaturen nicht mehr zuverlässig arbeiten kann, ist in einem zweiten Schritt eine weitere Abdichtungsmaßnahme vorgesehen. So verbleibt in der geschlossenen Stellung, vgl. Fig. 5, ein Restspalt 27, insbesondere bezüglich eines zweiten Flächenabschnitts 28, der sich in Bewegungsrichtung des Ventiltellers 20 erstreckt und somit auch in Strömungsrichtung des Gases durch den Leitungsabschnitt, Einlass 1. In einem in geschlossener Stellung dem zweiten Flächenabschnitt 28 gegenüberliegenden Abschnitt des Ventiltellers 20 ist nun eine Aufnahme vorgesehen, in der ein thermisch reaktives Material 15 so angeordnet ist, dass es dann, wenn es sich bei einer zweiten Temperatur, die höher als die erste Temperatur ist, ausdehnt, den Restspalt 27 schließt und weitere Haltekräfte auf das Schließelement, den Ventilteller 20, wirkt.

Mithin ist im Brandfall durch das zweischrittige Vorgehen ein sicheres, reversibles Schließen des mittels des Brandschutzeinsatzes 2' insgesamt gebildeten Brandschutzventils 5' gegeben.

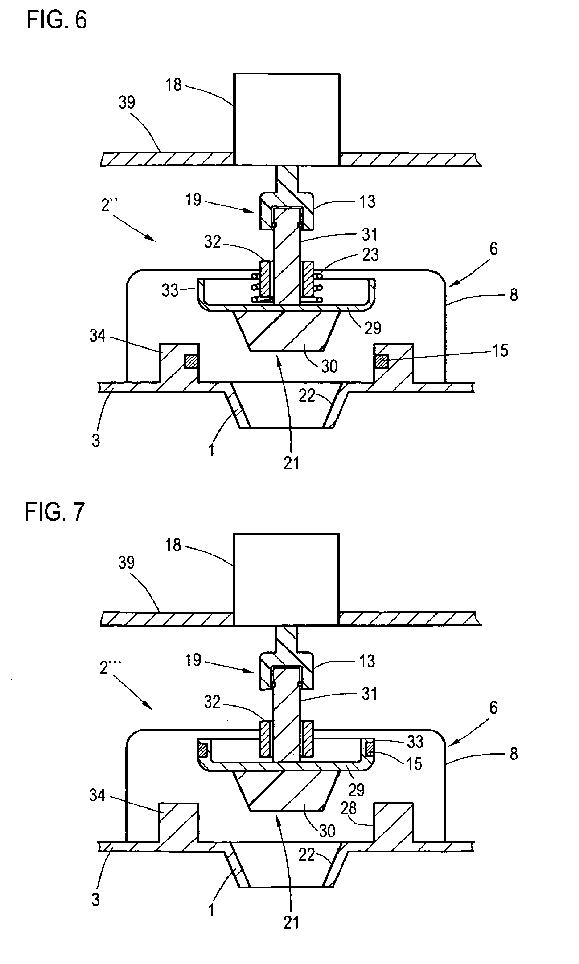

Eine weitere, dritte Ausführungsform eines Brandschutzeinsatzes 2" bei einem erfindungsgemäßen Gaszähler zeigt die Fig. 6. Dabei ist hier die Antriebsvorrichtung 18, wiederum eine elektrische Antriebsvorrichtung 18, an einem anderen Gehäuseteil 39 des Gaszählers befestigt. Das Kopplungselement 19 weist hier eine das eine Metallkappe 29 und das als Dichtkörper 30 ausgebildete Dichtelement 21 aufweisende Schließelement tragende Welle 31 und ein wiederum aus Kunststoff bestehendes, bei einer ersten Temperatur als Schmelztemperatur schmelzendes Halterungselement 13 auf. Wiederum wirkt das Dichtelement 21, welches wiederum aus Elastomeren bestehen kann, mit einem ersten Flächenabschnitt 22 des Gaseinlasses 1 zusammen. Das Gehäuse 6 des Brandschutzeinsatzes 2" weist wiederum Stege 8 auf, die hier als Haltebügel für Führungselemente 32 wirken, die die Welle 31 führen, insbesondere auch dann, wenn die Schmelzsicherung in Form des Halterungselements 13 weggeschmolzen ist. Um die Führungselemente 32 herum ist als Krafterzeugungsmittel wiederum eine Feder 23 vorgesehen, die die Metallkörper 29 des Schließelements gegen die geschlossene Stellung vorspannt. Schmilzt nun das Halterungselement 13, drückt die Feder 23, sich am Gehäuse 6 abstützend, das Schließelement in die geschlossene Stellung, mithin den Ventilsitz, wobei die Außenfläche 33 der Metallkappe 29 einem umlaufenden Vorsprung 34 des Gehäuses 3, einen Spalte bildend, gegenüber zu liegen kommt. Das bei der zweiten Temperatur, die größer als die erste Temperatur ist, expandierende, thermisch reaktive Material 15 ist in diesem Ausführungsbeispiel gaszählerseitig umlaufend in einer Aufnahme des Vorsprungs 34 vorgesehen. Selbstverständlich kann dennoch bei Erreichen der zweiten Temperatur und Expansion des Materials 15 der entstehende Spalt sicher abgedichtet werden.

Fig. 7 zeigt nun eine ausgehend von Fig. 6 modifizierte Version mit einem erfindungsgemäßen Brandschutzeinsatz 2"', die in zweierlei Hinsicht unterschiedlich ist. Zum einen ist keine Feder 23 vorgesehen, das bedeutet, in diesem Fall ist die auf das Schließelement, gebildet durch die Metallkappe 29 und das Dichtelement 21 einwirkende Kraft die Schwerkraft, das bedeutet, wenn die Schmelzsicherung Form des Halterungselements 13 weg schmilzt, fällt das Schließelement mit der Welle 31, durch das Führungselement 32 geführt, durch Einwirkung der Gravitationskraft nach unten und kommt im Ventilsitz zum Liegen.

Der zweite Unterschied zur Fig. 6 ist, dass das thermisch reaktive Material 15 hier nicht seitens des Vorsprungs 34 realisiert ist, der den zweiten Flächenabschnitt 28 aufweist, sondern seitens der Metallkappe 29, nachdem dort eine Aufnahme in der Fläche 33 realisiert ist.

Die Wirkung ist selbstverständlich entsprechend.

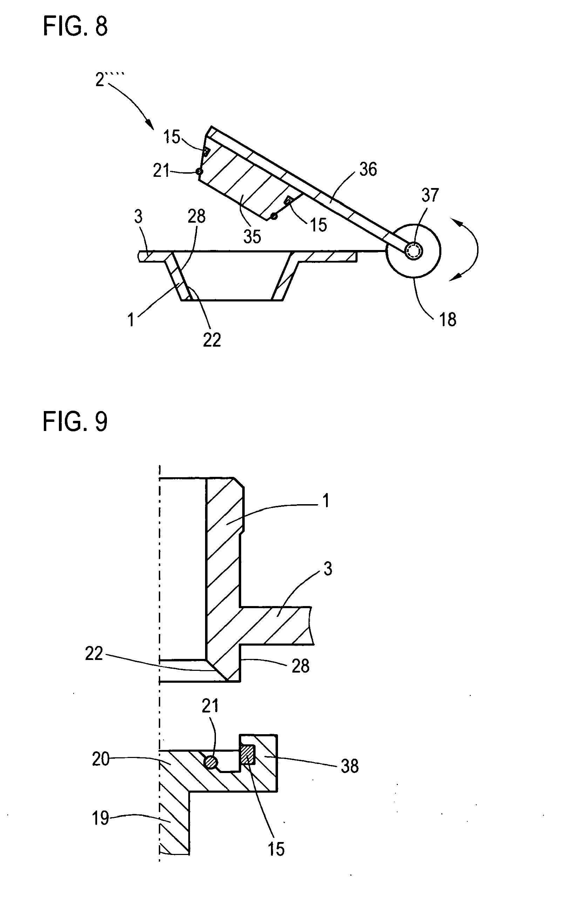

Fig. 8 betrifft eine vierte Ausführungsform eines erfindungsgemäßen Brandschutzeinsatzes 2"", wobei im Unterschied zu den vorherigen Ausführungsbeispielen die als Schließelement wirkende Kappe 35 an einem Schwenkhebel 36 geführt ist. Entsprechend ist die Antriebsvorrichtung 18 ein elektrischer Drehmotor, an den der Schwenkhebel 36 über eine hier nur gestrichelt angedeutete, schmelzbare Kupplung 37 als Halterungselement gekoppelt ist. Schmelzt die bei der ersten Temperatur schmelzbare Kupplung 37 weg, fällt die Kappe 32 dank der Gravitationskraft in den Ventilsitz am Gaseinlass 1, bei dem in diesem Fall der erste Flächenabschnitt 22 und der zweite Flächenabschnitt 28 auf derselben, hier schräg verlaufenden Fläche realisiert sind. Das Zusammenwirken mit dem Dichtungselement 21 und dem thermisch reaktiven Material 15 ist dann wie bereits in den vorangehenden Beispielen beschrieben.

Dabei sei an dieser Stelle noch angemerkt, dass das Ausführungsbeispiel gemäß Fig. 8 auch realisiert werden kann, indem statt der Gravitationskraft ein Krafterzeugungsmittel eingesetzt wird, vorliegend beispielsweise eine Spiralfeder.

Schließlich zeigt Fig.9 eine weitere Möglichkeit zur Anordnung der Flächenabschnitte 22 und 28 und eine entsprechende Ausgestaltung des hier wiederum als Ventilteller 20 ausgebildeten Schließelements. Dabei wird eine radial außenliegende Fläche zur Realisierung des Flächenabschnitts 28 genutzt, wobei ein entsprechender Fortsatz 38 des Ventiltellers 20 innenliegend die Aufnahme für das thermisch reaktive Material 15 sowie das thermisch reaktive Material 15 umfasst. Auch hier erstreckt sich der Flächenabschnitt 28 wieder entlang der Bewegungsrichtung des Schließelements, mithin des Ventiltellers 20.

## Patentansprüche

1. Brandschutzeinsatz (2) für einen gasführenden Leitungsabschnitt, insbesondere den Einlass (1) eines Gaszählers, umfassend ein Schließelement für eine Durchgangsöffnung des Leitungsabschnitts und/oder des Brandschutzeinsatzes (2), welches durch ein bei einer ersten Temperatur schmelzbares Halterungselement (13) in einer offenen Stellung gegen eine in eine geschlossene Stellung wirkende Kraft gehalten wird und/oder dem ein durch ein bei der ersten Temperatur schmelzbares und/oder seine Form veränderndes Halterungselement zurückgehaltenes, bei Schmelzen und/oder Formänderung des Halterungselements eine in die geschlossene Stellung wirkende Kraft auf das Schließelement ausübendes Krafterzeugungsmittel zugeordnet ist, und ein sich bei einer zweiten Temperatur, die höher als die erste Temperatur ist, ausdehnendes thermisch reaktives, insbesondere aufschäumendes Material (15), welches zum Verschließen wenigstens einer in der geschlossenen Stellung verbliebenen Durchgangsöffnung, insbesondere eines Spalts zwischen dem Schließelement und der Innenwand (16) des Leitungsabschnitts, und/oder zum Halten des Schließelements in der geschlossenen Stellung durch einen Ausdehnungsvorgang angeordnet ist.

2. Brandschutzeinsatz nach Anspruch 1, **dadurch gekennzeichnet, dass** bei einem insbesondere vertikal verlaufenden Leitungsabschnitt die wirkende Kraft die Schwerkraft ist und/oder die wirkende Kraft wenigstens teilweise durch ein elastisches Element, insbesondere eine Feder, erzeugt wird.

3. Brandschutzeinsatz nach Anspruch 1 oder 2, **dadurch gekennzeichnet, dass** das Schließelement eine in einem Gehäuse (6) des Brandschutzeinsatzes (2) geführte insbesondere zylindrische Hülse (12) ist, die in der offenen Stellung von einer in einer zu der Längsrichtung der Hülse (12) senkrechten Ebene geschlossenen Abschlussfläche (10) des Gehäuses (6) beabstandet ist und in der geschlossenen Stellung an der Abschlussfläche (10) anliegt, wobei insbesondere vorgesehen ist, dass die in der offenen Stellung im Wesentlichen formschlüssig innerhalb wenigstens eines Teils des Leitungsabschnitts angeordnete Hülse (12) in der geschlossenen Stellung auf der einen Seite durch die Abschlussfläche (10) und auf der anderen Seite durch eine Wand (16) des Leitungsabschnitts begrenzt wird.

4. Brandschutzeinsatz nach Anspruch 3, **dadurch gekennzeichnet, dass** die Abschlussfläche (10) über auch der Führung der Hülse (12) dienende Stege (8) mit einem innerhalb des Leitungsabschnitts befestigbaren Befestigungsteil (7) des Gehäuses (6) verbunden ist.

5. Brandschutzeinsatz nach Anspruch 3 oder 4, **dadurch gekennzeichnet, dass** das thermische reaktive Material (15) in wenigstens einem in der geschlossenen Stellung einer Wand des Gehäuses (6) und/oder des Leitungsabschnitts benachbarten Bereich der Außenwand der Hülse (12) angeordnet ist, insbesondere in einer Nut (17) und/oder diese ringförmig umschließend.

6. Brandschutzeinsatz nach einem der vorangehenden Ansprüche, **dadurch gekennzeichnet, dass** das Halterungselement (13) in einer Nut und/oder auf Vorsprüngen des Leitungsabschnitts und/oder des Gehäuses (6) und/oder über Stege (14) auf der Abschlussfläche (10) dem Schließelement benachbart gelagert ist.

7. Brandschutzeinsatz nach Anspruch 1 oder 2, **dadurch gekennzeichnet, dass** er als ein Ventileinsatz mit einer über ein Kopplungselement an das über ein insbesondere nicht hitzebeständiges Dichtungselement an einem ersten Flächenabschnitt abdichtende Schließelement gekoppelten, insbesondere elektrischen Antriebsvorrichtung zur Bewegung des Schließelements zwischen der geschlossenen Stellung und der offenen Stellung ausgebildet ist, wobei das thermisch reaktive Material bei Ausdehnung und geschlossenem Schließelement zur Abdichtung an einem zweiten Flächenabschnitt ausgebildet ist.

8. Brandschutzeinsatz nach Anspruch 7, **dadurch gekennzeichnet, dass** sich der zweite Flächenabschnitt in einer Strömungsrichtung des Gases durch den Leitungsabschnitt und/oder in einer Bewegungsrichtung des Schließelements in die geschlossene Stellung erstreckt.

9. Brandschutzeinsatz nach Anspruch 7 oder 8, **dadurch gekennzeichnet, dass** das schmelzbare Halterungselement für das insbesondere gegen die Schwerkraft gehaltene Schließelement Teil des Kopplungselements ist, insbesondere derart, dass das Schmelzen des Halterungselements eine Entkopplung des Schließelements von der Antriebsvorrichtung bewirkt.

10. Brandschutzeinsatz nach einem der Ansprüche 7 bis 9, **dadurch gekennzeichnet, dass** er ein bis wenigstens zu einer Temperatur von 700 °C thermisch stabiles Gehäuse umfasst, welches insbesondere eine Abstützfläche für das bevorzugt als elastisches Element, insbesondere Feder, ausgebildete Krafterzeugungsmittel aufweist.

11. Brandschutzventil nach einem der Ansprüche 7 bis 10, **dadurch gekennzeichnet, dass** ein die Kraft erzeugendes, auch ohne Schmelzen des Halterungsmittels bereits auf das Schließelement wirkendes elastisches Element zur Erzeugung einer bei Ansteuerung des Ventileinsatzes zum Schließen genutzten Kraft ausgebildet ist.

12. Brandschutzeinsatz nach einem der vorangehenden Ansprüche, **dadurch gekennzeichnet, dass** er, insbesondere an dem Befestigungsteil (7) des Gehäuses (6), mit entsprechenden Befestigungsmitteln des Leitungsabschnitts zusammenwirkende Befestigungsmittel aufweist, insbesondere in eine Nut des Leitungsabschnitts eingreifende Vorsprünge, und/oder über ein Befestigungsmittel an einem Gehäuse des Gaszählers befestigt ist.

13. Brandschutzeinsatz nach einem der vorangehenden Ansprüche, **dadurch gekennzeichnet, dass** das Halterungselement (13) aus wenigstens einem Kunststoff besteht und/oder als erste Temperatur eine Schmelztemperatur oberhalb von 70° C, insbesondere von 100° C, aufweist.

14. Brandschutzeinsatz nach einem der vorangehenden Ansprüche, **dadurch gekennzeichnet, dass** die zweite Temperatur größer als 100° C, insbesondere größer als 140° C, ist.

15. Gaszähler, umfassend einen mit einem Brandschutzeinsatz (2) nach einem der vorangehenden Ansprüche versehenen Einlass (1).

16. Gaszähler, umfassend einen Einlass (1) und einen an dem Einlass (1) als Leitungselement vorgesehenen Brandschutzeinsatz (2), umfassend ein Schließelement für eine Durchgangsöffnung des Leitungsabschnitts und/oder des Brandschutzeinsatzes (2), welches durch ein bei einer ersten Temperatur schmelzbares Halterungselement (13) in einer offenen Stellung gegen eine in eine geschlossene Stellung wirkende Kraft gehalten wird und/oder dem ein durch ein bei der ersten Temperatur schmelzbares und/oder seine Form veränderndes Halterungselement zurückgehaltenes, bei Schmelzen und/oder Formänderung des Halterungselements eine in die geschlossene Stellung wirkende Kraft auf das Schließelement ausübendes Krafterzeugungsmittel zugeordnet ist, wobei an dem Leitungsabschnitt ein sich bei einer zweiten Temperatur, die höher als die erste Temperatur ist, ausdehnendes thermisch reaktives, insbesondere aufschäumendes Material (15) angeordnet ist, welches zum Verschließen wenigstens einer in der geschlossenen Stellung verbliebenen Durchgangsöffnung, insbesondere eines Spalts zwischen dem Schließelement und der Innenwand (16) des Leitungsabschnitts, und/oder zum Halten des Schließelements in der geschlossenen Stellung durch einen Ausdehnungsvorgang angeordnet ist.
